Europäisches Patentamt

(19) European Patent Office    (11) Publication number:    **0 053 596**

Office européen des brevets    **B1**

(12)    **EUROPEAN PATENT SPECIFICATION**

(45) Date of publication of patent specification: **17.10.84** ·    (51) Int. Cl.³: **F 16 B 2/04, F 16 B 7/04**

(21) Application number: **81850229.6**

(22) Date of filing: **27.11.81**

(54) **Expanding means.**

(30) Priority: **28.11.80 SE 8008348**

(43) Date of publication of application:
**09.06.82 Bulletin 82/23**

(45) Publication of the grant of the patent:
**17.10.84 Bulletin 84/42**

(84) Designated Contracting States:
**AT CH DE FR GB IT LI**

(56) References cited:
**DE-A-2 331 779**
**FR-A-2 102 518**

(73) Proprietor: **Liljedahl, Gunnar**
**Alvik 7555**
**S-951 90 Lulea (SE)**

(72) Inventor: **Liljedahl, Gunnar**
**Alvik 7555**
**S-951 90 Lulea (SE)**

(74) Representative: **Billberg, Hans et al**
**JACOBSSON & BILLBERG PATENTBYRA AB Box**
**21113**
**S-100 31 Stockholm 21 (SE)**

Courier Press, Leamington Spa, England.

## Description

This invention relates to an expanding means for removable fastening in a cylindrical hole, consisting of an elastic cylinder, which is caused by axial contraction to expand and with its outer surface to engage with the cylindrical hole, and which is formed with a plurality of ribs extending substantially in the axial direction of the cylinder.

The invention is substantially intended to be used for locking in axial direction two members co-acting in a telescopic manner relative to one another. It is a known problem that the expanding movement proper can be carried out only with difficulty when the expanding means is positioned within the outer one of two such members, due to the fact, that the operator by using tools or the like has difficulties in controlling said expanding movement. This control, for example, may imply that the expanding means must be turned relative to a screw located within the expanding means and controlling the same. It is also known trying to use or attach on the outer surface of the expanding means a friction-increasing means so as with friction to abut the outer surface of the two telescopically co-acting members to such an extent, that the expanding means is prevented from turning, whereby it is possible to effect the axial contraction by turning a screw located within the expanding means. Heretofore, however, no such friction-increasing means are known in the art which ensure a sufficient friction for effecting a satisfactory contraction or, rather, to bring about by the expanding means an initial contraction in axial direction which is sufficiently strong to effect a safe fastening in the axial direction. It was found that the invention is particularly suitable for use at the adjustment of two telescopically co-acting members in the form, for example, of the length for a crutch, stick or the like. The characterizing features of the invention as defined in the attached claims solve the problem of rapidly and safely carrying out the expanding of the expanding means in such a way, that the expanding means safely can be fixed against axial movement in a cylindrical hole.

An embodiment of the invention is described in the following, with reference to the accompanying drawing, in which

Fig. 1 is an axial section through the expanding means and associated screw member, and

Fig. 2 is an end view of the cylinder seen from the right in Fig. 1.

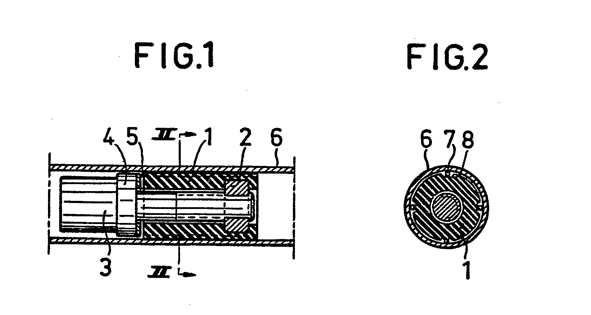

The expanding means consists of an elastic cylinder 1 of rubber or similar material. At its right-hand end in Fig. 1, the cylinder includes an internally threaded piece 2. A screw 3 extends with one end through the hole through the cylinder and engages screwingly with the threaded piece 2. A shoulder 4 of the screw 3 abuts the left-hand end of the elastic cylinder 1 via a friction-reducing washer 5. By turning the screw 3 relative to the elastic cylinder 1, the cylinder is contracted in axial direction and expands.

The cylinder is positioned in a cylindrical pipe 6, which thus constitutes one member of two telescopically co-acting members. The second member can be regarded to be the screw 3, which per se can be a long rod inserted in the pipe 6.

The outer surface of the cylinder 1 comprises longitudinal ribs 7, which extend from grooves 8 provided in the outer surface of the cylinder and project outwardly outside of the outer surface. Due to their extending from grooves in the outer surface, the ribs 7 are allowed to fold in radial direction, i.e. to the side, when the cylinder is being turned. Hereby a key effect arises when the rib 7 places itself against an edge of the groove 8 and against the inner surface of the pipe 6. This establishes a safe fastening between the ribs 7 and the inner surface of the pipe 6, i.e. the cylinder is safely retained against rotation in the pipe 6, whereby a relative turning between the screw 3 and the cylinder can be effected, without requiring the operator to hold the cylinder proper, but only the pipe 6 located on the outside. It is hereby understood that the expanding means can be used inaccessibly for an operator as soon as at least the screw by extension with a rod in the pipe 6 or the like can be turned.

The cylinder has been described above to comprise ribs 7 and grooves 8 extending in purely axial direction. It is understood, however, that deviations from the purely axial direction may occur without thereby jeopardizing the function of the invention or abandoning the invention idea. The grooves 8, further, can be designed in a different manner, and in Fig. 2, for example, the sides of the grooves 8 are shown slightly inclined so that the openings of the grooves exceed in size the bottom of the grooves.

## Claims

1. An expanding means for removable fastening in a cylindrical hole, consisting of an elastic cylinder (1), which is caused by axial contraction to expand and with the outer surface to engage with the cylindrical hole, which cylinder is provided with a plurality of ribs (7) extending substantially in the axial direction of the cylinder, characterised in that the ribs (7) extend from within grooves (8) running in the outer surface of the cylinder (1) and project outwardly outside of this outer surface, which ribs, when folded to the side, are engaged against the respective edges of the grooves.

2. An expanding means as defined in claim 1, characterized in that one end of the cylinder is provided with an internal thread (2), and the other end is provided with a removable washer (5) for abutting a shoulder (4) on a screw (3) extending through the cylinder.

3. Utilization of an expanding means as defined in claim 1, or 2, characterized in that the cylinder is attached expandably on the inside of one of two members (3, 6) which are telescopically co-acting.

## Patentansprüche

1. Expansionsmittel für eine lösbare Befestigung in einer zylindrischen Bohrung, bestehend aus einem elastischen Zylinder (1), dessen Expansion durch axiales Zusammenziehen erreicht wird, wobei dessen äußere Oberfläche mit der zylindrischen Bohrung in Berührung gebracht wird und wobei der Zylinder (1) mit einer Vielzahl von sich im wesentlichen axial erstreckenden Rippen (7) versehen ist, dadurch gekennzeichnet, daß die Rippen (7) aus der äußeren Oberfläche des Zylinders (1) herausragen sowie innerhalb von Rillen (8) dieser Oberfläche verlaufen und daß die Rippen (7) durch seitliches Umbiegen mit den Ecken der Rillen (8) in Berührung gebracht werden.

2. Expansionsmittel nach Anspruch 1, dadurch gekennziechnet, daß ein Ende des Zylinders (1) mit einem Innengewinde (2) versehen ist und daß sich an dem anderen Ende des Zylinders (1) eine herausnehmbare Scheibe (5) befindet, welche gegen die Schulter (4) einer sich durch den Zylinder (1) erstreckenden Schraube (3) anliegt.

3. Verwendung eines Expansionsmittels gemäß den Ansprüchen 1 oder 2, dadurch gekennzeichnet, daß der Zylinder (1) ausdehnbar auf der Innenseite eines von zwei teleskopartig zusammenwirkenden Bauteilen (3, 6) angeordnet ist.

## Revendications

1. Moyen d'expansion, pour réaliser une fixation amovible dans un trou cylindrique, comportant un cylindre élastique (1), susceptible de se gonfler sous l'effet d'une contraction axiale, pour que la surface externe du cylindre prenne appui dans le trou cylindrique, ce cylindre étant pourvu d'un certain nombre de nervures (7) qui s'étendent sensiblement dans le sens de l'axe du cylindre, caractérisé en ce que les nervures (7) sont en saillie dans des gorges (6) ménagées à la surface externe du cylindre (1), et débordent vers l'extérieur au delà de cette surface externe, de manière à pouvoir se replier sur le côté en prenant appui sur les bords correspondants des gorges.

2. Moyen d'expansion selon la revendication 1, caractérisé en ce qu'une extrémité du cylindre est pourvue d'un filetage interne (2), et en ce que l'autre extrémité est pourvue d'une rondelle amovible (5), adaptée à servir d'appui à un épaulement (4) d'une vis (3) qui traverse le cylindre.

3. Utilisation d'un moyen d'expansion conforme à l'une des revendications 1 ou 2, caractérisée en ce qu'on monte le cylindre, de manière à lui permettre de se déformer par expansion, à l'intérieur d'un élément faisant partie d'un ensemble de deux éléments (3, 6) associés de manière télescopique.

# FIG.1

# FIG.2